# EUROPEAN PATENT APPLICATION

(11) **EP 4 318 897 A1**
(43) Date of publication of application: **07.02.2024**
(21) Application number: 22775442.1
(22) Date of filing: 18.03.2022
(51) Int. Cl.: H02K 7/10, H02K 11/21

(54) **MAGNETIC MODULATION GEAR DEVICE, DRIVE DEVICE, AND ROBOT**

(30) Priority: 26.03.2021 JP 2021053292
(71) Applicant: Sumitomo Heavy Industries, Ltd., Tokyo 141-6025 (JP)
(72) Inventor: YAMAMOTO, Taizo, Yokosuka-shi, Kanagawa 237-8555 (JP); MINARI, Takahiro, Yokosuka-shi, Kanagawa 237-8555 (JP); NAKAGAWA, Hiroki, Yokosuka-shi, Kanagawa 237-8555 (JP)
(74) Representative: Louis Pöhlau Lohrentz
(86) International application number: PCT/JP2022/012566
(87) International publication number: WO 2022/202654

(57) **Abstract**

In order to make a torque sensor unnecessary, a magnetic modulation gear device 30 is configured to include an input shaft 23, an output shaft 32b whose speed is changed with respect to the input shaft 23 through a speed reduction unit and which outputs torque, an input shaft-side sensor 35 that measures a rotation angle of the input shaft 23, and an output shaft-side sensor 36 that measures a rotation angle of the output shaft 32b. For example, a drive device 1 includes the magnetic modulation gear device 30, a drive source 20 that inputs torque to the input shaft, and a control device 40 that controls an amount of operation of the drive source on the basis of the measured rotation angle of the input shaft and the measured rotation angle of the output shaft such that a target torque is obtained and controls the torque of the output shaft without using a torque sensor.

## Description

### Technical Field

The present invention relates to a magnetic modulation gear device, a drive device, and a robot.

### Background Art

In the related art, a magnetic modulation gear device has been known in which a magnetic pole piece member having a plurality of magnetic pole pieces is disposed between two magnets disposed on the inner and outer peripheries to modulate a magnetic flux distribution between the magnets on the inner and outer peripheries. In the magnetic modulation gear device, torque is transmitted between the magnet on the inner peripheral side and the magnetic pole piece member to transmit decelerating or accelerating rotation (for example, see PTL 1).

### Citation List

### Patent Literature

[PTL 1] Japanese Unexamined Patent Publication No. 2017-17984

### Summary of Invention

### Technical Problem

In the magnetic modulation gear device according to the related art, there is a demand for controlling the transmitted torque.

The present invention has been made in view of the above circumstances, and an object of the present invention is to provide a technique that can suitably perform torque control.

### Solution to Problem

According to the present invention, there is provided a magnetic modulation gear device including: an input shaft; an output shaft whose speed is changed with respect to the input shaft through a speed reduction unit and which outputs torque; an input shaft-side sensor that measures a rotation angle of the input shaft; and an output shaft-side sensor that measures a rotation angle of the output shaft.

In addition, according to the present invention, there is provided a drive device including: the magnetic modulation gear device; a drive source that inputs torque to the input shaft; and a control device that performs torque control on the drive source from a difference between a target torque and torque estimated by a torque estimation unit that estimates the torque transmitted from the input shaft to the output shaft from the rotation angle measured by the input shaft-side sensor and the rotation angle measured by the output shaft-side sensor.

Further, according to the present invention, there is provided a drive device including: the magnetic modulation gear device; a drive source that inputs torque to the input shaft; and a control device that controls an amount of operation of the drive source on the basis of the measured rotation angle of the input shaft and the measured rotation angle of the output shaft such that a target torque is obtained.

In addition, the present invention provides a robot including the drive device.

### Advantageous Effects of Invention

According to the present invention, it is possible to respond to torque control without providing a dedicated torque sensor.

### Brief Description of Drawings

Fig. 1 is an axial sectional view illustrating a drive device according to a first embodiment.
Fig. 2 is a perspective view illustrating a magnetic modulation gear device.
Fig. 3 is a diagram illustrating a relationship between a phase difference and output torque of an output shaft.
Fig. 4 is an axial sectional view illustrating a drive device according to a second embodiment.
Fig. 5 is an axial sectional view illustrating a drive device according to a third embodiment.
Fig. 6 is a side view illustrating a robot to which the drive device is applied.

### Description of Embodiments

### [First Embodiment]

Hereinafter, a first embodiment of the present invention will be described in detail with reference to the drawings.

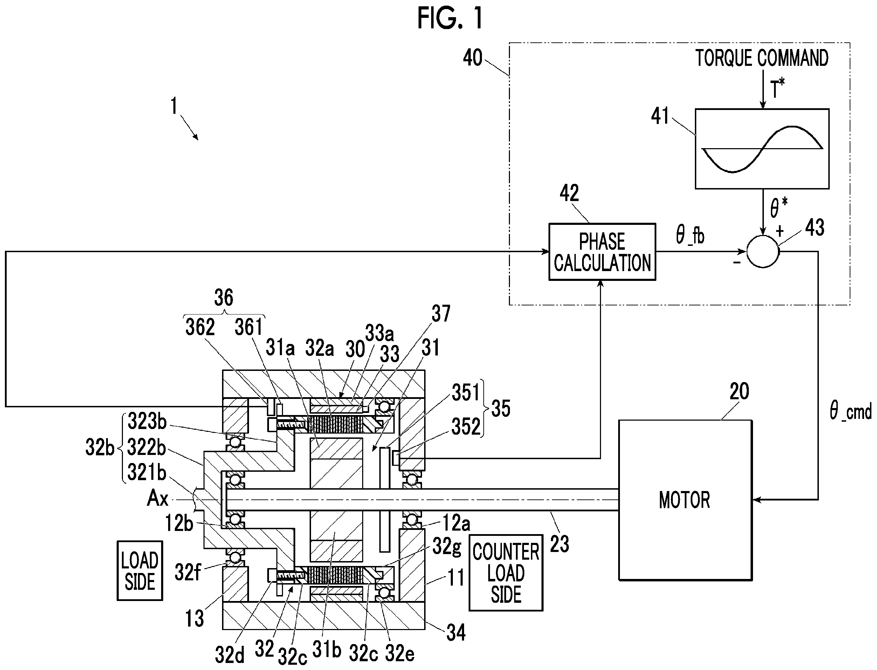

Fig. 1 is an axial sectional view illustrating a drive device 1 according to the first embodiment.

As illustrated in Fig. 1, the drive device 1 according to this embodiment includes a motor 20, a magnetic modulation gear device 30, and a control device 40 that performs torque control on the drive device 1.

### [Motor]

A motor capable of controlling an angular amount of rotation, for example, a brushless motor is given as an example of the motor 20.

The motor 20 includes a motor rotor and a motor stator (both are not illustrated), and the motor rotor includes a shaft 23, a rotor yoke 31b, and an inner pole magnet (rotor magnet) 31a. The rotor yoke 31b is made of a magnetic material and is provided on an outer peripheral surface of the shaft 23, and the inner pole magnet 31a is provided on an outer peripheral surface of the rotor yoke 31b.

The motor stator is composed of a stator core around which a plurality of coils are wound, and the plurality of coils are excited in a predetermined order to drive the rotation of the motor rotor (shaft 23).

Further, the shaft 23 extends to the inside of the magnetic modulation gear device 30.

In addition, in the following description, a direction along a center axis Ax of the shaft 23 is referred to as an "axial direction", a direction perpendicular to the center axis Ax is referred to as a "radial direction", and a rotation direction about the center axis Ax is referred to as a "circumferential direction". Further, in the axial direction, a side (left side in Fig. 1) on which an output shaft 32b of the drive device 1 is connected to an external driven member is referred to as a "load side", and a side (right side in Fig. 1) opposite to the load side is referred to as a "counter load side".

### [Magnetic Modulation Gear Device]

The magnetic modulation gear device 30 is disposed on the load side of the motor 20 and functions as a transmission (for example, a speed reducer) that changes a rotation input from the motor 20 and outputs the changed rotation to the load side. The magnetic modulation gear device 30 and the motor 20 share the shaft 23. That is, the shaft 23 functions as an input shaft of the magnetic modulation gear device 30.

Specifically, the magnetic modulation gear device 30 includes a high-speed rotor 31, a low-speed rotor 32, an outer pole magnet 33, a casing 34 as a housing, a high-speed shaft rotation angle sensor 35 as an input shaft-side sensor that measures a rotation angle of the shaft 23, a low-speed shaft rotation angle sensor 36 as an output shaft-side sensor that measures a rotation angle of the output shaft 32b, and a temperature sensor 37 that detects the temperature of the magnet of the magnetic modulation gear device 30.

As illustrated in Fig. 1, the casing 34 is a cylindrical body that is concentric with the shaft 23, and the shaft 23 of the motor 20 extends from a counter load-side cover 11 that closes a counter load-side end portion of the casing 34 to the inside of the hollow output shaft 32b provided in a load-side cover 13 that closes a load-side end portion of the casing 34 through the center of the casing 34.

Then, the shaft 23 is supported by a bearing 12a (for example, a ball bearing) that is provided at the center of the counter load-side cover 11 and a bearing 12b (for example, a ball bearing) that is provided on the inner periphery of the output shaft 32b to be rotatable about the center axis Ax.

The output shaft 32b is disposed on the load side of the shaft 23 to be concentric with the shaft 23. The output shaft 32b has a solid shaft portion 321b, a hollow cylindrical portion 322b that is provided in a counter load-side end portion of the shaft portion 321b, and a flange portion 323b that is provided on the outer periphery of a counter load-side end portion of the cylindrical portion 322b. The shaft portion 321b, the cylindrical portion 322b, and the flange portion 323b of the output shaft 32b are integrated and are disposed concentrically with the shaft 23.

The outer periphery of the cylindrical portion 322b is rotatably supported by a bearing 32f (for example, a ball bearing) that is provided at the center of the load-side cover 13. Further, the counter load-side end portion of the cylindrical portion 322b is open toward the counter load side, and the shaft 23 is rotatably supported by the bearing 12b on the inner periphery of the cylindrical portion 322b.

In addition, the output shaft 32b may not be hollow as long as a structure in which the load-side end portion of the shaft 23 is not supported inside the output shaft 32b is used. Alternatively, a load-side portion (not illustrated) of the output shaft 32b may be a solid shaft. That is, the shape of the output shaft is not particularly limited.

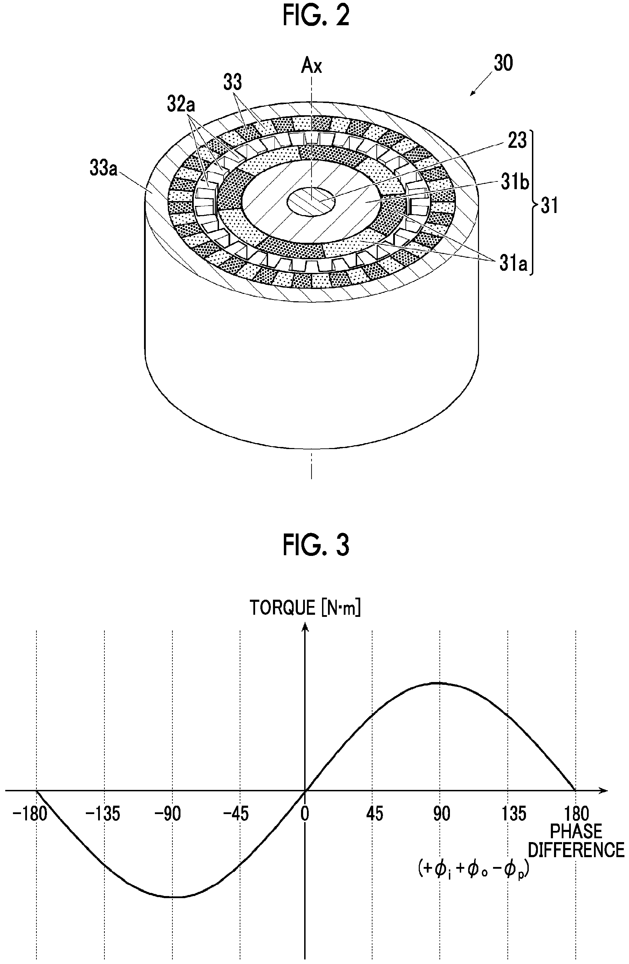

Fig. 2 is a perspective view illustrating the magnetic modulation gear device 30.

As illustrated in Figs. 1 and 2, the high-speed rotor 31 includes the shaft 23, the rotor yoke 31b, and the inner pole magnet 31a. The rotor yoke 31b is fixedly attached to the outer periphery of the shaft 23 at a roughly intermediate position in the axial direction (strictly speaking, a position that is slightly closer to the counter load side) in the casing 34. The rotor yoke 31b has a uniform outer diameter over the entire length in the axial direction, and the inner pole magnet 31a is fixedly attached to the outer periphery of the rotor yoke 31b. The inner pole magnet 31a also has a uniform outer diameter over the entire length in the axial direction.

The inner pole magnet 31a is a permanent magnet, such as a neodymium magnet, and a plurality of inner pole magnets 31a having opposite polarities are alternately attached to the outer peripheral surface of the rotor yoke 31b in the circumferential direction. The inner pole magnets 31a form magnetic poles composed of a plurality of pole pairs. Further, instead of the plurality of inner pole magnets 31a, an integrated ring-shaped magnet may be used.

The low-speed rotor 32 includes the output shaft 32b and a plurality of magnetic pole pieces (pole pieces) 32a.

The plurality of magnetic pole pieces 32a are disposed to be concentric with the high-speed rotor 31 and to surround the periphery of the high-speed rotor 31.

The plurality of magnetic pole pieces 32a are made of a laminated steel plate and are disposed at predetermined intervals in the circumferential direction. However, the magnetic pole pieces 32a may be made of any soft magnetic material. For example, the magnetic pole pieces 32a may be made of a dust core, an amorphous material, or SPCC. The number of magnetic pole pieces 32a is the number of outer pole pairs (the number of pole pairs of the outer pole magnets 33) ± the number of inner pole pairs (the number of pole pairs of the inner pole magnets 31a) and is generally the number of outer pole pairs + the number of inner pole pairs. Two magnetic pole pieces 32a that are adjacent to each other in the circumferential direction may be connected by a thin connection portion or may be connected by a non-magnetic material.

Resin portions 32c are fixed to both end portions of the magnetic pole piece 32a in the axial direction, and the flange portion 323b of the output shaft 32b is fixed to the load-side resin portion 32c by a bolt 32d (for example, which is made of a resin such as super engineering plastic). In addition, a connection method is not limited, and a connection method without using the bolt 32d may be used. For example, the resin portion 32c and the output shaft 32b may be integrally molded. As described above, in the output shaft 32b, the load-side shaft portion 321b is exposed from the casing 34 and is connected to the driven member (not illustrated).

The low-speed rotor 32 is rotatably supported by the casing 34 through a bearing 32e that is provided on the counter load side of the magnetic pole piece 32a and a bearing 32f that supports the output shaft 32b. Of the bearings, the bearing 32e on the counter load side is disposed between the casing 34 and a ring member 32g that is made of stainless steel and is fixed to the resin portion 32c on the counter load side of the magnetic pole piece 32a. As described above, the bearing 32f on the load side is disposed between the load-side cover 13 of the casing 34 and the cylindrical portion 322b of the output shaft 32b.

The outer pole magnets 33 are concentrically disposed on the outer periphery of the plurality of magnetic pole pieces 32a with a predetermined gap interposed therebetween. A plurality of outer pole magnets 33 that have a larger number of pole pairs than the inner pole magnets 31a of the high-speed rotor 31 and that have polarities opposite to each other are alternately disposed in the circumferential direction. The outer pole magnets 33 are attached to an inner peripheral surface of a yoke portion 33a that is fitted into the casing 34 to be disposed as described above and function as a stator. Alternatively, instead of the plurality of outer pole magnets 33, an integrated ring-shaped magnet may be used.

The inner pole magnets 31a, the magnetic pole pieces 32a, and the outer pole magnets 33 constitute a speed reduction unit that is provided between the input shaft and the output shaft.

The high-speed shaft rotation angle sensor 35 includes a detected portion 351 that is rotated integrally with the shaft 23 and a sensor unit 352 that is disposed in the vicinity of the detected portion 351 and detects the detected portion 351.

The low-speed shaft rotation angle sensor 36 includes a detected portion 361 that is rotated integrally with the output shaft 32b and a sensor unit 362 that is disposed in the vicinity of the detected portion 361 and detects the detected portion 361.

The high-speed shaft rotation angle sensor 35 and the low-speed shaft rotation angle sensor 36 are disposed in the same space inside the casing 34.

For example, a rotary encoder that outputs the rotational displacement of the shaft 23 or the output shaft 32b as a digital signal is given as an example of the high-speed shaft rotation angle sensor 35 and the low-speed shaft rotation angle sensor 36. However, the high-speed shaft rotation angle sensor 35 and the low-speed shaft rotation angle sensor 36 may be resolvers that output the rotational displacement as an analog signal or may be other rotation detectors. The rotary encoder may be configured to have an optical detection unit or to have a magnetic detection unit. Further, different types of detectors from the high-speed shaft rotation angle sensor 35 and the low-speed shaft rotation angle sensor 36 may be used.

The detected portion 351 of the high-speed shaft rotation angle sensor 35 is configured as a disk (or a ring) that is fixedly mounted on the shaft 23 at a position facing a load-side surface of the counter load-side cover 11. The detected portion 351 is provided concentrically with the shaft 23 and is rotated about the center axis Ax together with the shaft 23.

For example, codes that can be optically or magnetically read from the counter load side are formed on a counter load-side surface of the detected portion 351 along the circumference having the center axis Ax as its center. In addition, in a case in which the detected portion 351 is formed in a ring shape, these codes may be formed on the outer periphery or inner periphery of the ring.

The sensor unit 352 is fixedly mounted on the load-side surface of the counter load-side cover 11 of the casing 34. The sensor unit 352 is disposed so as to face the detected portion 351 in close proximity. The sensor unit 352 is configured as, for example, an optical sensor or a magnetic sensor that can read the codes of the detected portion 351.

The detected portion 361 of the low-speed shaft rotation angle sensor 36 is configured as a disk (or a ring) that is fixedly mounted on the outer periphery of the flange portion 323b of the output shaft 32b. The detected portion 361 is provided concentrically with the output shaft 32b and is rotated about the center axis Ax together with the output shaft 32b.

For example, codes that can be optically or magnetically read are formed on a load-side surface of the detected portion 361 along the circumference having the center axis Ax as its center. In addition, in a case in which the detected portion 361 is formed in a ring shape, these codes may be formed on the outer periphery or inner periphery of the ring.

The sensor unit 362 is fixedly mounted on the inner periphery of the casing 34 in the vicinity of the load side of the flange portion 323b of the output shaft 32b. The sensor unit 362 is disposed to extend inward in the radial direction such that it faces the detected portion 361 in close proximity. The sensor unit 362 is configured as, for example, an optical sensor or a magnetic sensor that can read the codes of the detected portion 361.

Further, in the above example, the detected portions 351 and 361 and the sensor units 352 and 362 of the high-speed shaft rotation angle sensor 35 and the low-speed shaft rotation angle sensor 36 are disposed to face each other in the axial direction. However, the dispositional relationship between the sensor units and the non-detected portions is not particularly limited. For example, in a case in which the codes of the detected portions 351 and 361 are formed on the outer periphery or inner periphery of the ring, the sensor units 352 and 362 may be disposed outside or inside the detected portions 351 and 361 in the radial direction, and the detected portions 351 and 361 and the sensor units 352 and 362 may be disposed to face each other in the radial direction.

The temperature sensor 37 detects the temperature of the outer pole magnet 33 as the magnet. The temperature sensor 37 is attached to the outer pole magnet 33. A sensor that can come into contact with an object whose temperature is to be measured, such as a thermocouple, a resistance temperature detector, or a thermistor, and can detect temperature can be used as the temperature sensor 37. However, the temperature sensor 37 is not limited thereto as long as it can measure the temperature of the object to be detected. For example, a non-contact-type sensor, such as an infrared detector, that can detect the temperature of the object, whose temperature is to be detected, at a position distant from the object, may be used.

### [Control Device]

When the motor 20 is driven in the drive device 1, input torque is applied to the shaft 23. Then, the high-speed rotor 31 of the magnetic modulation gear device 30 is rotated together with the shaft 23. For a space magnetic flux waveform of the inner pole magnets 31a of the high-speed rotor 31, a frequency is modulated by the magnetic pole pieces 32a of the low-speed rotor 32, and torque is transmitted to the low-speed rotor 32. At this time, a reduction ratio is (the number of magnetic poles of the magnetic pole pieces 32a of the low-speed rotor 32)/(the number of pole pairs of the inner pole magnets 31a).

Fig. 3 is a diagram illustrating the relationship between a phase difference and output torque of the output shaft 32b.

As described above, in the magnetic modulation gear device 30, the magnetic pole pieces 32a and the output shaft 32b are rotated at a reduction ratio determined by (the number of magnetic poles of the magnetic pole pieces 32a of the low-speed rotor 32)/(the number of pole pairs of the inner pole magnets 31a) with respect to the rotation angle of the shaft 23. In this case, when the rotation angle of the output shaft 32b in a case in which the output shaft 32b is rotated at a rotation angle according to the reduction ratio with respect to the rotation of the shaft 23 is set as a reference position and a phase difference occurs in the rotation angle of the output shaft 32b with respect to the reference position of the output shaft 32b due to a delay, output torque is generated in the output shaft 32b. The output torque generated in the output shaft 32b has, for example, a correlation illustrated in Fig. 3 with the phase difference.

The example illustrated in Fig. 3 shows the characteristics that, assuming that the period of one magnetic pole piece 32a is 360 [deg], for example, the output torque of the output shaft 32b is 0 in a case in which the phase difference occurring in the output shaft 32b is 0 or ± 180 [deg] and has the maximum value in a case in which the phase difference is ± 90 [deg].

The control device 40 performs torque control on the basis of the characteristics of the phase difference occurring in the output shaft 32b and the output torque of the output shaft 32b.

Specifically, as illustrated in Fig. 1, the control device 40 includes a phase difference output unit 41 that outputs a target phase difference θ* of the output shaft 32b for outputting a target output torque with respect to a torque command T* indicating the target output torque to be generated in the output shaft 32b, a phase difference calculation unit 42 that calculates a phase difference θ_fb currently occurring in the output shaft 32b, and a subtractor 43 that calculates a deviation θ_cmd between the target phase difference θ* and the phase difference θ_fb currently occurring in the output shaft 32b.

In addition, each of the above-described configurations of the control device 40 may be implemented by hardware. Alternatively, the control device 40 may be configured as a calculation processing device and functionally implemented by processing by software.

The phase difference output unit 41 stores table data based on the characteristics (for example, the characteristics illustrated in Fig. 3) of the phase difference occurring in the output shaft 32b of the low-speed rotor 32 and the output torque generated in the output shaft 32b. In the table data, the value of the target phase difference θ* of the output shaft 32b corresponding to each of a plurality of numerical values of the torque command T* (target output torque) is determined. When the torque command T* is input, the phase difference output unit 41 specifies the corresponding target phase difference θ* of the output shaft 32b determined in the table data and outputs the specified target phase difference θ*.

In addition, for the table data, different table data is prepared for each of a plurality of rotation angles of the shaft 23.

Further, for the table data for each of the rotation angles of the shaft 23, table data in which the value of each target phase difference θ* has been corrected is prepared for each of a plurality of different temperatures in consideration of the influence of ambient environmental temperature.

Therefore, the phase difference output unit 41 selects appropriate table data on the basis of the rotation angle of the shaft 23 detected by the sensor unit 352 of the high-speed shaft rotation angle sensor 35 and the temperature detected by the temperature sensor 37, specifies the target phase difference θ*, and outputs the specified target phase difference θ*.

The rotation angle of the shaft 23 detected by the sensor unit 352 of the high-speed shaft rotation angle sensor 35 and the rotation angle of the output shaft 32b detected by the sensor unit 362 of the low-speed shaft rotation angle sensor 36 are input to the phase difference calculation unit 42.

The phase difference calculation unit 42 calculates, as the reference position, the rotation angle (phase) of the output shaft 32b in a case in which the output shaft 32b is rotated at a rotation angle according to the reduction ratio determined in the magnetic modulation gear device 30 from the detected rotation angle (phase) of the shaft 23. Further, the phase difference calculation unit 42 calculates the difference between the reference position and the rotation angle (phase) of the output shaft 32b detected by the low-speed shaft rotation angle sensor 36 to calculate the phase difference θ_fb occurring in the output shaft 32b.

The subtractor 43 subtracts the phase difference θ_fb actually occurring in the output shaft 32b, which has been output from the phase difference calculation unit 42, from the target phase difference θ* of the output shaft 32b for obtaining the torque command T* (target output torque), which has been output from the phase difference output unit 41, to calculate the deviation θ_cmd of the phase difference of the output shaft 32b.

Further, the deviation θ_cmd of the phase difference is multiplied by a predetermined gain, and a multiplied value is input as the amount of operation of the motor 20.

Therefore, the amount of operation input to the shaft 23 from the motor 20 is controlled such that the target phase difference θ* occurs in the output shaft 32b, and the target output torque corresponding to the torque command T* is generated in the output shaft 32b.

### [Technical Effect of First Embodiment]

The magnetic modulation gear device 30 of the drive device 1 includes the high-speed shaft rotation angle sensor 35 that measures the rotation angle of the shaft 23 and the low-speed shaft rotation angle sensor 36 that measures the rotation angle of the output shaft 32b. Therefore, it is possible to easily acquire the phase difference occurring in the output shaft 32b from the outputs of these sensors 35 and 36. In addition, it is possible to perform suitable torque control, easily responding to torque control on the output torque of the output shaft 32b on the basis of the phase difference.

Therefore, the drive device 1 can easily control the output torque without providing a dedicated torque sensor for detecting torque. As a result, it is possible to simplify the configuration of the device, to reduce the number of components, and to further reduce the size of the device and manufacturing costs associated with the simplification and the reduction.

In addition, in the drive device 1, the high-speed shaft rotation angle sensor 35 and the low-speed shaft rotation angle sensor 36 are disposed in the casing 34 of the magnetic modulation gear device 30. The magnetic modulation gear device 30 does not require lubricating oil in the casing 34, unlike a speed reducer or the like that uses meshing of gears. Therefore, each of the sensors 35 and 36 can be disposed in a clean environment. Further, since the casing 34 protects each of the sensors 35 and 36 from, for example, external contact or buffering and adhesion of dust, each of the sensors 35 and 36 can perform stable detection over a long period of time. As a result, it is possible to improve the reliability of the device.

Further, the drive device 1 includes the control device 40 that controls the amount of operation of the motor 20 such that the target output torque determined in the torque command T* is output from the output shaft 32b, on the basis of the rotation angle of the shaft 23 detected by the sensor unit 352 of the high-speed shaft rotation angle sensor 35 and the rotation angle of the output shaft 32b detected by the sensor unit 362 of the low-speed shaft rotation angle sensor 36. Therefore, a torque sensor is not required, and it is possible to achieve the torque control of the drive device 1 with a simple configuration.

Furthermore, the control device 40 corrects the amount of operation of the motor 20 on the basis of the temperature of the outer pole magnets 33 of the magnetic modulation gear device 30 detected by the temperature sensor 37 such that the target output torque is obtained. Therefore, the drive device 1 can perform torque control with higher accuracy in consideration of the influence of the temperature.

### [Second Embodiment]

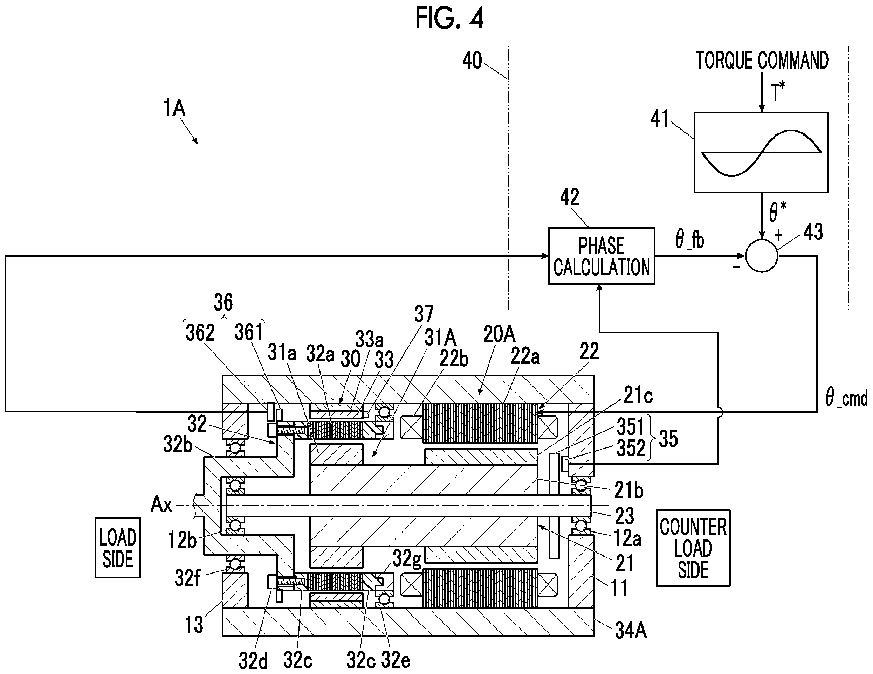

A second embodiment of the present invention will be described with reference to the drawings. Fig. 4 is an axial sectional view illustrating a drive device 1A according to the second embodiment.

Differences of the drive device 1A according to the second embodiment from the drive device 1 will be mainly described. As illustrated in Fig. 4, the drive device 1A is mainly different from the drive device 1 in that a motor 20A and the magnetic modulation gear device 30 have a common casing 34A as a housing.

As illustrated in Fig. 4, the casing 34A accommodates an internal configuration of the motor 20A and an internal configuration of the magnetic modulation gear device 30. Therefore, the casing 34A is configured as a cylindrical body that is longer than the casing 34 in the axial direction.

The drive device 1A is the same as the drive device 1 in that the casing 34 includes the counter load-side cover 11 and the load-side cover 13 in a counter load-side end portion and a load-side end portion, respectively; and, at the centers of the covers, the shaft 23 common to the motor 20A and the magnetic modulation gear device 30 is supported by the bearings 12a and 12b to be rotatable about the center axis Ax and the output shaft 32b is supported by the bearings 32f to be rotatable about the center axis Ax.

Further, the motor 20A includes a motor rotor 21 and a motor stator 22. The motor rotor 21 includes a shaft 23, a rotor yoke 21b, and a rotor magnet 21c. The rotor yoke 21b is made of a non-magnetic material and is fitted and fixed to an outer peripheral surface of the shaft 23. The rotor magnet 21c is a permanent magnet, such as a neodymium magnet. A plurality of rotor magnets 21c corresponding to a predetermined number of pole pairs are attached to a portion, which is located on the inner diameter side of the motor stator 22, in an outer peripheral surface of the rotor yoke 21b.

The motor stator 22 is configured by winding a coil 22b around a stator core 22a that is made of a laminated steel plate. However, the stator core 22a may also be any soft magnetic material such as a dust core, an amorphous material, or SPCC. The motor stator 22 is disposed concentrically on the outer diameter side of the motor rotor 21 and is held in the casing 34A in a state in which the stator core 22a is fitted into the casing 34A.

Meanwhile, the magnetic modulation gear device 30 is different in that a high-speed rotor 31A uses a rotor yoke 21b common to the motor 20A instead of the rotor yoke 31b.

That is, the rotor yoke 21b provided on the outer periphery of the shaft 23 extends to the inside of the magnetic modulation gear device 30 that is provided on the load side of the motor 20A, and a plurality of inner pole magnets 31a are attached to the outer periphery of a load-side end portion of the rotor yoke 21b to configure the high-speed rotor 31A of the magnetic modulation gear device 30.

For the configuration and disposition of a low-speed shaft rotation angle sensor 36, the low-speed shaft rotation angle sensor 36 is disposed on the load side in the casing 34A as in the drive device 1.

On the other hand, a high-speed shaft rotation angle sensor 35 is the same as that in the drive device 1 in that it is disposed on the counter load side in the casing 34A and detects the rotation angle of the shaft 23, but is different from that in the drive device 1 in that it is disposed closer to the counter load side than the motor 20A.

A control device 40 controls the amount of operation of the motor 20A in the casing 34A and is the same as that in the drive device 1 in a control configuration thereof.

Therefore, in the case of the drive device 1A, when the motor 20A is driven, input torque is also applied to the shaft 23. Then, the high-speed rotor 31A of the magnetic modulation gear device 30 is rotated together with the shaft 23. For a space magnetic flux waveform of the inner pole magnets 31a of the high-speed rotor 31A, a frequency is modulated by the magnetic pole pieces 32a of the low-speed rotor 32, and torque is transmitted to the low-speed rotor 32. Then, the output shaft 32b is rotated at a reduction ratio of (the number of magnetic poles of the magnetic pole pieces 32a of the low-speed rotor 32)/(the number of pole pairs of the inner pole magnets 31a) .

Then, in this case, the phase difference output unit 41 of the control device 40 outputs the target phase difference θ* of the output shaft 32b corresponding to the torque command T* indicating the target output torque. Meanwhile, the phase difference calculation unit 42 calculates the phase difference θ_fb that occurs in the output shaft 32b, and the subtractor 43 calculates the deviation θ_cmd of the phase difference of the output shaft 32b.

Then, the amount of operation determined on the basis of the deviation θ_cmd is input to the motor 20A, and the target output torque corresponding to the torque command T* is generated in the output shaft 32b.

In the drive device 1A, the magnetic modulation gear device 30 and the motor 20A have the common casing 34A, and the internal configurations of the magnetic modulation gear device 30 and the motor 20A are disposed in the casing 34A.

Therefore, the drive device 1A can obtain the same technical effects as the drive device 1, and it is possible to miniaturize and downsize the entire device.

Further, since the internal configurations of the magnetic modulation gear device 30 and the motor 20A are disposed in the same casing 34A, it is easy to share components. For example, the rotor yoke 21b is shared by the motor rotor 21 and the high-speed rotor 31A. It is possible to simplify the configuration and to reduce the number of components.

### [Third Embodiment]

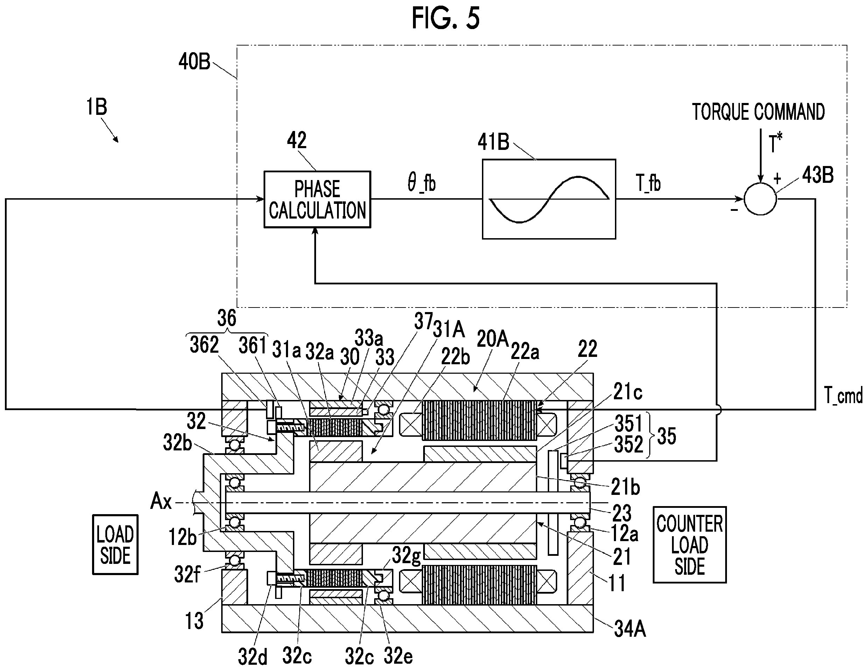

A third embodiment of the present invention will be described with reference to the drawings. Fig. 5 is an axial sectional view illustrating a drive device 1B according to the third embodiment.

Differences of the drive device 1B according to the third embodiment from the drive device 1A will be mainly described. As illustrated in Fig. 5, the drive device 1B is different from the drive device 1A in the configuration of a control device 40B.

The control device 40B includes a phase difference calculation unit 42 that calculates the phase difference θ_fb currently occurring in the output shaft 32b, a torque acquisition unit 41B that calculates output torque T_fb currently generated in the output shaft 32b from the phase difference θ_fb, and a subtractor 43B that receives the input of the torque command T* indicating the target output torque to be generated in the output shaft 32b and the output torque T_fb currently generated in the output shaft 32b from the torque acquisition unit 41B and that calculates the deviation T_cmd of the output torque of the output shaft 32b.

In addition, in the control device 40B, each of the above-described configurations may be implemented by hardware. Alternatively, the control device 40B may be configured as a calculation processing device and may be functionally implemented by processing by software.

The phase difference calculation unit 42 calculates the phase difference θ_fb occurring in the output shaft 32b from the rotation angle of the shaft 23 detected by the sensor unit 352 of the high-speed shaft rotation angle sensor 35 and the rotation angle of the output shaft 32b detected by the sensor unit 362 of the low-speed shaft rotation angle sensor 36.

The torque acquisition unit 41B stores table data based on characteristics (for example, see Fig. 3) of the phase difference occurring in the output shaft 32b of the low-speed rotor 32 and the output torque generated in the output shaft 32b.

In the table data, the value of the output torque generated in the output shaft 32b corresponding to each of a plurality of numerical values of the phase difference of the output shaft 32b is determined. Then, when the phase difference θ_fb occurring in the output shaft 32b is input from the phase difference calculation unit 42, the torque acquisition unit 41B outputs the corresponding torque value determined in the table data as the output torque T_fb currently generated in the output shaft 32b.

That is, the phase difference calculation unit 42 and the torque acquisition unit 41B cooperate with each other to function as a "torque estimation unit that estimates the output torque of the output shaft 32b from the rotation angle measured by an input shaft-side sensor (high-speed shaft rotation angle sensor 35) and the rotation angle measured by an output shaft-side sensor (low-speed shaft rotation angle sensor 36)".

In addition, in the case of the table data, different table data is prepared for each of a plurality of rotation angles of the shaft 23. Further, for the table data for each of the rotation angles of the shaft 23, table data in which the value of each output torque T_fb has been corrected is prepared for each of a plurality of different temperatures in consideration of the influence of ambient environmental temperature.

Therefore, the torque acquisition unit 41B selects appropriate table data on the basis of the rotation angle of the shaft 23 detected by the sensor unit 352 of the high-speed shaft rotation angle sensor 35 and the temperature detected by the temperature sensor 37, specifies the output torque T_fb currently generated in the output shaft 32b, and outputs the specified output torque T_fb.

The subtractor 43B subtracts the output torque T_fb actually generated in the output shaft 32b, which has been output from the torque acquisition unit 41B, from the torque command T* (target output torque) to calculate the deviation T_cmd of the output torque of the output shaft 32b.

Further, torque control is performed such that the deviation T_cmd is multiplied by a predetermined gain and the multiplied value is torque input to the magnetic modulation gear device 30 by the motor 20A.

Therefore, the torque of the motor 20A is controlled such that an appropriate phase difference occurs in the output shaft 32b. As a result, the target output torque corresponding to the torque command T* is generated in the output shaft 32b.

That is, the control device 40B controls the input torque of a drive source (motor 20A) from the difference between the target output torque (torque command T*) and the output torque (output torque T_fb) estimated by the phase difference calculation unit 42 and the torque acquisition unit 41B as the torque estimation unit, using the process of the subtractor 43B.

As described above, in the drive device 1B, the phase difference calculation unit 42 and the torque acquisition unit 41B in the control device 40B function as the torque estimation unit, which makes it possible to easily acquire the output torque generated in the output shaft 32b from the outputs of the high-speed shaft rotation angle sensor 35 and the low-speed shaft rotation angle sensor 36.

In addition, the control device 40B corrects the output torque calculated by the torque acquisition unit 41B on the basis of the temperature of the outer pole magnets 33 of the magnetic modulation gear device 30 detected by the temperature sensor 37. Therefore, the drive device 1B can perform torque control with higher accuracy in consideration of the influence of the temperature.

### [Example of Application to Robot]

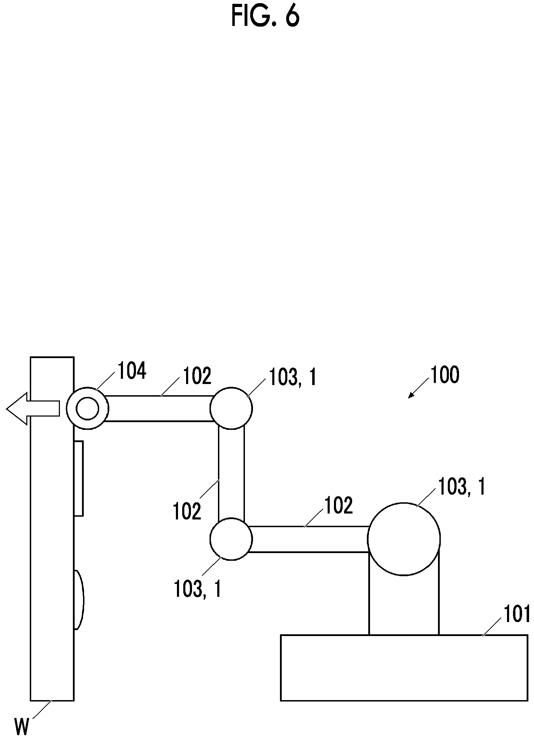

An example of the application of the drive devices according to the first to third embodiments to a robot will be described with reference to the drawing. Fig. 6 is a side view illustrating a robot 100 which is the example of the application.

The robot 100 includes a base 101 serving as a foundation, a plurality of arms 102 that are connected by joints 103, and a tool 104 that is held by in a tip part of the plurality of arms 102 connected to each other. The drive device 1 is provided in each joint 103.

Each drive device 1 in each joint 103 of the robot 100 includes the high-speed shaft rotation angle sensor 35 and the low-speed shaft rotation angle sensor 36.

Therefore, it is possible to control the operation of each joint on the basis of the detection of the angle sensors 35 and 36 to arbitrarily control the position, operation, and operation speed of the tool 104. Then, the drive device 1 in each joint 103 of the robot 100 can control the output torque of the output shaft 32b in each joint 103 on the basis of the sensor outputs of the high-speed shaft rotation angle sensor 35 and the low-speed shaft rotation angle sensor 36 used for the operation control.

Therefore, the individual drive devices 1 in each joint 103 appropriately control the output torque, which makes it possible to perform, for example, force control in which the tool 104 of the robot 100 is in contact with a workpiece W illustrated in Fig. 6 with a constant pressing force (target value) or other work is performed on the workpiece W by the tool 104 while the tool 104 is in contact with the workpiece W with a constant pressing force (target value).

Further, in the case of the robot 100, in order to perform the force control, instead of the configuration in which the control device 40 is provided in each drive device 1 in order to operatively associate the motors 20 of the drive devices 1 in each joint 103, a configuration may be adopted in which a control device that integrally controls each drive device 1 is provided. Alternatively, a configuration may be adopted in which a higher-level control device for operatively associating the control devices 40 in each drive device 1.

Further, instead of the drive device 1, other drive devices 1A and 1B may be provided in each joint 103 of the robot 100.

### [Other Configurations]

The embodiments of the present invention have been described above. However, the present invention is not limited to the above-described embodiments.

For example, in the above-described embodiment, the rotor magnets 21c of the motor 20A and the inner pole magnets 31a of the magnetic modulation gear device 30 form the magnetic poles that are independent of each other. However, the field pole of the motor 20A and the magnetic pole of the high-speed rotor 31 of the magnetic modulation gear device 30 may be shared.

In addition, in each of the drive devices 1, 1A, and 1B, both the high-speed shaft rotation angle sensor 35 and the low-speed shaft rotation angle sensor 36 are disposed in the casing 34 or 34A. However, at least one of the high-speed shaft rotation angle sensor 35 and the low-speed shaft rotation angle sensor 36 may be disposed in the casing 34 or 34A. Even in this case, any of the sensors 35 or 36 disposed in the casing is protected, and it is possible to improve the stability of detection and the reliability of the device.

In addition, a brushless motor is given as an example of the motors 20 and 20A. However, the type and structure of the motor are not particularly limited, and the motor may be, for example, a synchronous machine or an induction machine.

Further, the magnetic modulation gear device 30 according to each of the above-described embodiments has the configuration in which the outer pole magnet 33 is used as a stator and the output is taken out from the low-speed rotor 32 having the magnetic pole pieces 32a. However, a configuration may be adopted in which the magnetic pole piece 32a is fixed, the outer pole magnet 33 is connected to the rotatable low-speed rotor, and the output is taken out from the low-speed rotor.

In addition, in each of the above-described embodiments, the case in which the magnetic modulation gear device 30 as the transmission is a speed reducer has been described as an example. However, the magnetic modulation gear device 30 as the transmission may be a speed increaser.

In this case, the configuration can be implemented by appropriately changing the number of pole pairs of the outer pole magnets 33, the number of pole pairs of the inner pole magnets 31a, and the number of magnetic poles of the magnetic pole pieces 32a.

Alternatively, the torque of the motor 20 may be input from the output shaft 32b, and high-speed rotation may be taken out from the shaft 23. In this case, the output torque of the shaft 23 can be detected or controlled by calculating the phase difference of the shaft 23.

Further, in the drive device 1B, the control device 40B has the function of the torque estimation unit (the phase difference calculation unit 42 and the torque acquisition unit 41B) and the function of controlling the input torque of the motor 20A. However, the two functions may be implemented by different control devices.

In this case, a control element composed of a chip or the like that implements the function of the torque estimation unit may be provided in the magnetic modulation gear device 30 (or the magnetic modulation gear device 30 integrated with the motor 20A) such that the magnetic modulation gear device 30 can independently detect the output torque.

In addition, the details described in the above-described embodiments can be appropriately changed without departing from the gist of the invention.

### Industrial Applicability

The present invention has industrial applicability for magnetic modulation gear devices, drive devices, and robots.

### Reference Signs List

1, 1A, 1B: Drive device
20, 20A: Motor (drive source)
23: Shaft (input shaft)
30: Magnetic modulation gear device
31, 31A: High-speed rotor
31a: Inner pole magnet
31b: Rotor yoke
32: Low-speed rotor
32a: Magnetic pole piece (pole piece)
32b: Output shaft
33: Outer pole magnet
33a: Yoke portion
34, 34A: Casing
35: High-speed shaft rotation angle sensor (input shaft-side sensor)
36: Low-speed shaft rotation angle sensor (output shaft-side sensor)
37: Temperature sensor
40, 40B: Control device
41: Phase difference output unit
41B: Torque acquisition unit
42: Phase difference calculation unit
43, 43B: Subtractor
100: Robot
103: Joint
Ax: Center axis
T*: Torque command
T_fb: Output torque
T_cmd: Deviation of output torque
θ*: Phase difference
θ_fb: Phase difference
θ_cmdθ: Deviation

## Claims

1. A magnetic modulation gear device comprising:
an input shaft;
an output shaft whose speed is changed with respect to the input shaft through a speed reduction unit and which outputs torque;
an input shaft-side sensor that measures a rotation angle of the input shaft; and
an output shaft-side sensor that measures a rotation angle of the output shaft.

2. The magnetic modulation gear device according to claim 1, further comprising:
a casing,
wherein at least the input shaft-side sensor or the output shaft-side sensor is provided in the casing.

3. The magnetic modulation gear device according to claim 2,
wherein both the input shaft-side sensor and the output shaft-side sensor are provided in the same space of the casing.

4. The magnetic modulation gear device according to any one of claims 1 to 3, further comprising:
a torque estimation unit that estimates an output torque of the output shaft from the rotation angle measured by the input shaft-side sensor and the rotation angle measured by the output shaft-side sensor.

5. The magnetic modulation gear device according to claim 4,
wherein the torque estimation unit corrects the output torque of the output shaft according to a temperature of a magnet of the magnetic modulation gear device and estimates the output torque.

6. A drive device comprising:
the magnetic modulation gear device according to claim 4 or 5;
a drive source that applies an input torque to the input shaft; and
a control device that controls the input torque of the drive source from a difference between the output torque estimated by the torque estimation unit and a target output torque.

7. A drive device comprising:
the magnetic modulation gear device according to any one of claims 1 to 3;
a drive source that applies an input torque to the input shaft; and
a control device that controls an amount of operation of the drive source on the basis of the measured rotation angle of the input shaft and the measured rotation angle of the output shaft such that a target output torque is output from the output shaft.

8. The drive device according to claim 7,
wherein the control device corrects the amount of operation of the drive source for outputting the target output torque according to a temperature of a magnet of the magnetic modulation gear device.

9. A robot comprising:
the drive device according to any one of claims 6 to 8.
